# EUROPEAN PATENT APPLICATION

(11) **EP 4 270 313 A1**
(43) Date of publication of application: **01.11.2023**
(21) Application number: 22170579.1
(22) Date of filing: 28.04.2022
(51) Int. Cl.: G06T 7/10, G06T 7/30, G06T 7/73

(54) **REGISTERING PROJECTION IMAGES TO VOLUMETRIC IMAGES**

(71) Applicant: Koninklijke Philips N.V., 5656 AG Eindhoven (NL)
(72) Inventor: SCHMIDT-RICHBERG, Alexander, Eindhoven (NL); PREVRHAL, Sven Peter, Eindhoven (NL); WIEMKER, Rafael, Eindhoven (NL); KLINDER, Tobias, Eindhoven (NL); STROOSMA, Otto, Eindhoven (NL); GERAATS, Jacobus Sigbertus Marie, Eindhoven (NL)
(74) Representative: Philips Intellectual Property & Standards

(57) **Abstract**

A computer-implemented method of registering medical images, is provided. The method includes computing a spatial transformation between a first projection image (P₁) and a volumetric image. The first projection image (P₁) is generated from a first position (POS₁) of a projection imaging system (110). Input defining the region of interest (ROI) in the volumetric image is received. One or more adjustments (T_{P1→P2}) to the first position (POS₁) of the projection imaging system are then calculated based on the spatial transformation and the received input, to provide a second position (POS₂) of the projection imaging system for generating a second projection image (P₂) representing the region of interest (ROI). A second projection image (P₂) representing the region of interest (ROI) is then received. The second projection image (P₂) is generated from the second position (POS₂). The second projection image (P₂) is then registered to the volumetric image (V₁) based on the spatial transformation and the calculated one or more adjustments (T_{P1→P2}).

## Description

### FIELD OF THE INVENTION

The present disclosure relates to registering a projection image representing a region of interest "ROI" to a volumetric image. A computer-implemented method, a computer program product, and a system, are disclosed.

### BACKGROUND OF THE INVENTION

Medical procedures are often performed using a combination of projection images, i.e. two-dimensional images, and volumetric images, i.e. three-dimensional images. For instance, prior to a medical procedure, a "pre-procedural" computed tomography "CT", or magnetic resonance "MR", volumetric image, may be acquired in order to diagnose and to plan a subsequent medical procedure on a region of interest. Volumetric images are often used for this purpose since they permit anatomical structures to be visualised from different perspectives. The medical procedure may be planned by augmenting the volumetric image with planning information such as contours that delineate target regions for subsequent treatment, organs at risk that must be avoided during treatment, insertion orientations for medical instruments, and so forth. During the medical procedure, one or more "intra-procedural" projection images may be generated in order to provide guidance to a physician in the execution of the medical procedure. X-ray projection images are often used for this purpose. X-ray projection images are often used during a medical procedure since they may be generated with a lower amount of X-ray dose to a subject than CT images, particularly when live intra-procedural images, i.e. fluoroscopic images, of the region of interest are used to guide the procedure, and also because their geometry better supports simultaneous procedure execution, for instance manipulation of a surgical instrument, and imaging. The intra-procedural projection images are typically registered to the pre-procedural volumetric image and displayed as an overlay image in order to provide additional context to the projection images, and consequently to guide the physician in performing the procedure in accordance with the treatment plan.

By way of an example, percutaneous nephrolithotripsy "PCNL", is a minimally invasive urological procedure for the treatment of kidney stones that is typically performed under the guidance of fluoroscopic X-ray projection imaging. Prior to a PNCL procedure, a CT image is typically acquired and used to plan the procedure. Planning information such as the target structure, organs-at-risk, and so forth are delineated in the CT image. Interventional procedure steps such as intended needle insertion paths may also be marked on the CT image. The planning information is then mapped from the pre-procedural CT image onto the intra-operative X-ray projection images in order to guide the physician in performing the procedure.

However, at the start of a medical procedure it can be challenging to position a projection system in a manner that permits the intra-procedural projection images to be registered to a pre-procedural volumetric image, whilst also providing sufficient detail of a region of interest in the intra-procedural projection images to perform the procedure. For example, a zoomed-in image that provides a detailed view of the region of interest may be desired in the intra-procedural projection images. However, this zoomed-in view may not have sufficient anatomical landmarks to register the intra-procedural projection images to the pre-procedural volumetric image. Consequently, at the start of an interventional procedure, a trial-and-error approach may be used in order to find a position of the projection imaging system that achieves both of these objectives. This is time-consuming and hampers clinical workflow.

Thus, there is a need to improve the way in which projection images of a region of interest are registered to volumetric images.

### SUMMARY OF THE INVENTION

According to one aspect of the present disclosure, a computer-implemented method of registering medical images, is provided. The method includes:
- receiving a volumetric image comprising a region of interest;
- receiving a first projection image, the first projection image being generated from a first position of a projection imaging system and corresponding to a first portion of the volumetric image;
- computing a spatial transformation between the first projection image and the volumetric image based on an identification of a plurality of landmarks represented in both the first projection image and the volumetric image;
- receiving input defining the region of interest in the volumetric image;
- calculating, based on the spatial transformation and the received input, one or more adjustments to the first position of the projection imaging system to provide a second position of the projection imaging system for generating a second projection image representing the region of interest defined in the volumetric image;
- receiving a second projection image representing the region of interest defined in the volumetric image, the second projection image being generated from the second position; and
- registering the second projection image to at least a portion of the volumetric image based on the spatial transformation and the calculated one or more adjustments.

Since, in the above method, the second projection image is registered to the volumetric image based on the spatial transformation as well as the calculated one or more adjustments to the first position of the projection imaging system, the second projection image may include fewer landmarks than would typically be needed to perform an image registration, or even none at all. Thus, a second projection image may be provided, that includes a detailed view of a region of interest, and which is robustly registered to the volumetric image.

Further aspects, features, and advantages of the present disclosure will become apparent from the following description of examples, which is made with reference to the accompanying drawings.

### BRIEF DESCRIPTION OF THE DRAWINGS

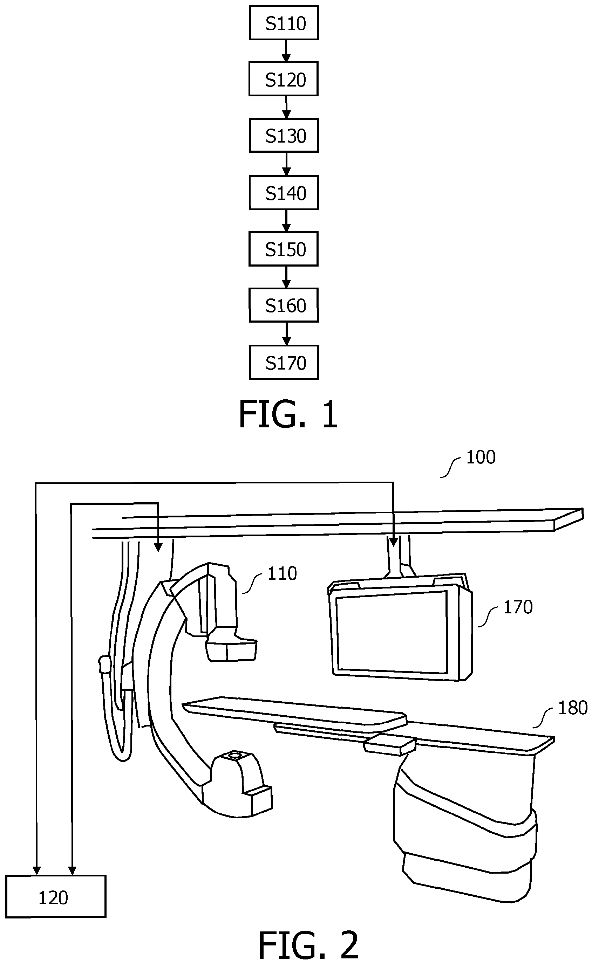

Fig. 1 is a flowchart illustrating an example of a method of registering medical images, in accordance with some aspects of the present disclosure.
Fig. 2 is a schematic diagram illustrating an example of a system 100 for registering medical images, in accordance with some aspects of the present disclosure.

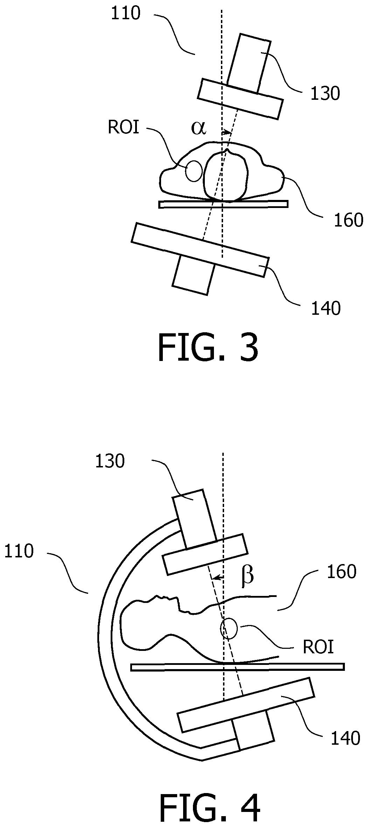

Fig. 3 is a schematic diagram illustrating a position of a projection imaging system 110 respective a region of interest ROI, including a rotational angle α of a central ray of the projection imaging system around a longitudinal axis of a subject 160, in accordance with some aspects of the present disclosure.
Fig. 4 is a schematic diagram illustrating a position of a projection imaging system 110 respective a region of interest ROI, including a tilt angle β of a central ray of the projection imaging system with respect to a cranial-caudal axis of the subject 160, in accordance with some aspects of the present disclosure.

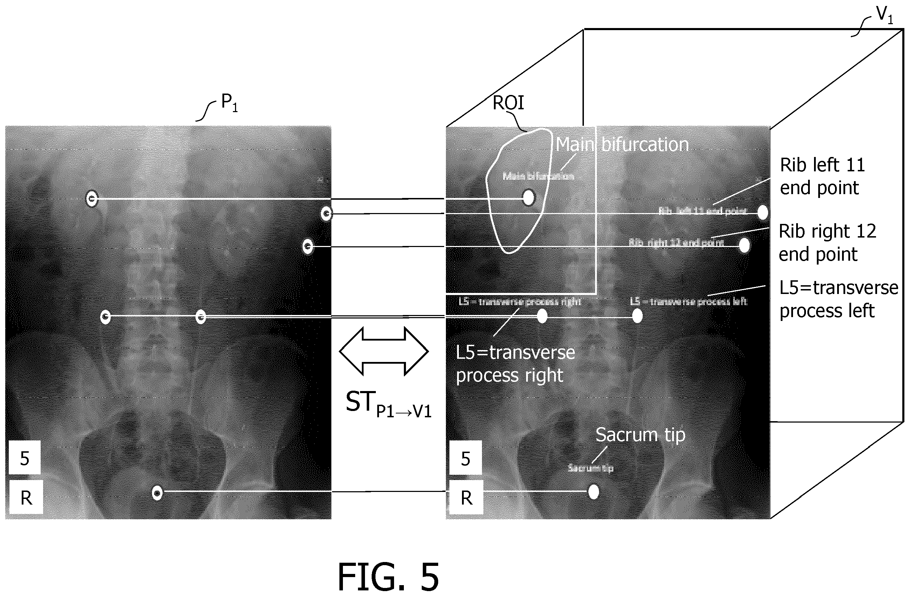

Fig. 5 is a schematic diagram illustrating an example of the operation of computing S130 a spatial transformation ST_{P1→V1} between a first projection image P₁ and a volumetric image V₁ based on an identification of a plurality of landmarks represented in both the first projection image and the volumetric image, in accordance with some aspects of the present disclosure.

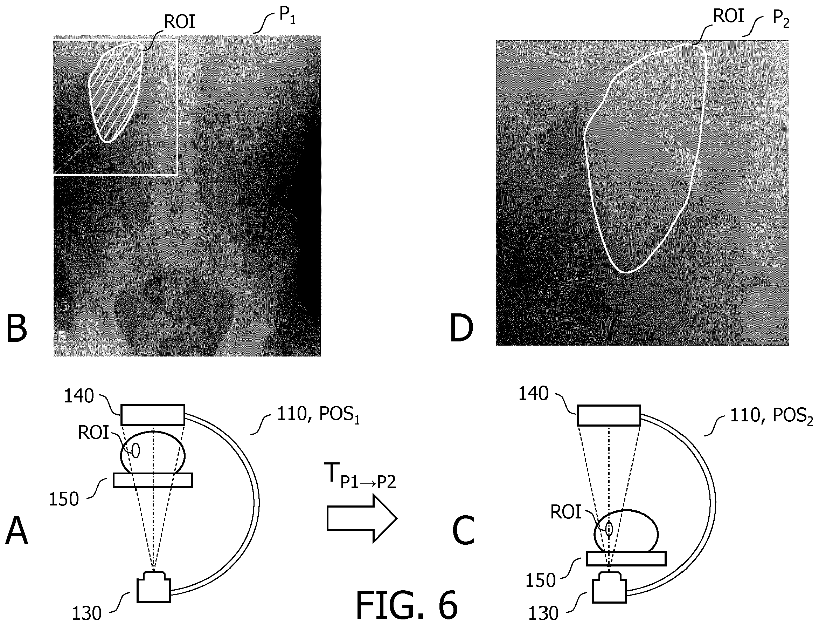

Fig. 6 is a schematic diagram illustrating an example of a first projection image P₁ generated by a projection imaging system 110 in a first position POS₁, and a second projection image P₂ generated by the projection imaging system 110 in a second position POS₂, in accordance with some aspects of the present disclosure.

### DETAILED DESCRIPTION OF EMBODIMENTS

Examples of the present disclosure are provided with reference to the following description and figures. In this description, for the purposes of explanation, numerous specific details of certain examples are set forth. Reference in the specification to "an example", "an implementation" or similar language means that a feature, structure, or characteristic described in connection with the example is included in at least that one example. It is also to be appreciated that features described in relation to one example may also be used in another example, and that all features are not necessarily duplicated in each example for the sake of brevity. For instance, features described in relation to a computer implemented method, may be implemented in a computer program product, and in a system, in a corresponding manner.

In the following description, reference is made to various examples in which a projection image is registered to a volumetric image. In some examples, the projection image is an X-ray projection image and the volumetric image is a CT image. However, it is to be appreciated that the disclosure is not limited to these examples, and that the projection image may in general be any type of projection image, including for example a single photon emission computed tomography "SPECT" scintigraphy image. Likewise, the volumetric image may alternatively be any type of volumetric image, including for example a magnetic resonance "MR" image.

Reference is also made herein to examples in which the region of interest in the projection and volumetric images is a kidney. However, it is to be appreciated that this example region of interest serves only as an example. The methods disclosed herein are not limited to a particular type of region of interest. Thus, the region of interest may in general be any anatomical region.

Reference is also made herein to examples in which a clinical procedure is carried out. In some examples, an intra-procedural projection image is registered to a pre-procedural volumetric image. In some examples, reference is made to an example PNCL procedure for the treatment of kidney stones. However, it is to be appreciated that this procedure serves only as an example, and that the methods disclosed herein are not limited to a particular type of procedure, or to use with images that relate to a particular point in time with respect to the procedure, i.e. to any pre- or intra-procedural stage. Nor are the method disclosed herein limited to use in combination with a clinical procedure at all. Thus, the methods disclosed herein may be used to register a projection image to a volumetric image in general.

In the following description, reference is made to various methods that are implemented by a computer, i.e. by a processor. It is noted that the computer-implemented methods disclosed herein may be provided as a non-transitory computer-readable storage medium including computer-readable instructions stored thereon, which, when executed by at least one processor, cause the at least one processor to perform the method. In other words, the computer-implemented methods may be implemented in a computer program product. The computer program product can be provided by dedicated hardware, or hardware capable of running the software in association with appropriate software. When provided by a processor, the functions of the method features can be provided by a single dedicated processor, or by a single shared processor, or by a plurality of individual processors, some of which can be shared. The explicit use of the terms "processor" or "controller" should not be interpreted as exclusively referring to hardware capable of running software, and can implicitly include, but is not limited to, digital signal processor "DSP" hardware, read only memory "ROM" for storing software, random access memory "RAM", a non-volatile storage device, and the like. Furthermore, examples of the present disclosure can take the form of a computer program product accessible from a computer-usable storage medium, or a computer-readable storage medium, the computer program product providing program code for use by or in connection with a computer or any instruction execution system. For the purposes of this description, a computer-usable storage medium or a computer readable storage medium can be any apparatus that can comprise, store, communicate, propagate, or transport a program for use by or in connection with an instruction execution system, apparatus, or device. The medium can be an electronic, magnetic, optical, electromagnetic, infrared, or a semiconductor system or device or propagation medium. Examples of computer-readable media include semiconductor or solid state memories, magnetic tape, removable computer disks, random access memory "RAM", read-only memory "ROM", rigid magnetic disks and optical disks. Current examples of optical disks include compact disk-read only memory "CD-ROM", compact disk-read/write "CD-R/W", Blu-Ray^{™} and DVD.

As mentioned above, at the start of a medical procedure it can be challenging to position a projection system in a manner that permits intra-procedural projection images to be registered to a pre-procedural volumetric image, whilst also providing sufficient detail of a region of interest in the intra-procedural projection images to perform the procedure. For example, a zoomed-in image that provides a detailed view of the region of interest may be desired in the intra-procedural projection images. However, this zoomed-in view may not have sufficient anatomical landmarks to register the intra-procedural projection images to the pre-procedural volumetric image. Consequently, at the start of an interventional procedure, a trial-and-error approach may be used in order to find a position of the projection imaging system that achieves both of these objectives. This is time-consuming and hampers clinical workflow.

Fig. 1 is a flowchart illustrating an example of a method of registering medical images, in accordance with some aspects of the present disclosure. Fig. 2 is a schematic diagram illustrating an example of a system 100 for registering medical images, in accordance with some aspects of the present disclosure. Operations described in relation to the method illustrated in Fig. 1, may also be performed in the system 100 illustrated in Fig. 2, and vice versa. With reference to Fig. 1, the computer-implemented method of registering medical images includes:
- receiving S110 a volumetric image V₁ comprising a region of interest ROI;
- receiving S120 a first projection image P₁, the first projection image being generated from a first position POS₁ of a projection imaging system 110 and corresponding to a first portion of the volumetric image V₁;
- computing S130 a spatial transformation ST_{P1→V1} between the first projection image P₁ and the volumetric image V₁ based on an identification of a plurality of landmarks represented in both the first projection image and the volumetric image;
- receiving S140 input defining the region of interest ROI in the volumetric image V₁;
- calculating S150, based on the spatial transformation ST_{P1→V1} and the received input, one or more adjustments T_{P1→P2} to the first position POS₁ of the projection imaging system to provide a second position POS₂ of the projection imaging system for generating a second projection image P₂ representing the region of interest ROI defined in the volumetric image V₁;
- receiving S160 a second projection image P₂ representing the region of interest ROI defined in the volumetric image V₁, the second projection image P₂ being generated from the second position POS₂; and
- registering S170 the second projection image P₂ to at least a portion of the volumetric image V₁ based on the spatial transformation ST_{P1→V1} and the calculated one or more adjustments T_{P1→P2}.

Since, in the above method, the second projection image is registered to the volumetric image based on the spatial transformation as well as the calculated one or more adjustments to the first position of the projection imaging system, the second projection image may include fewer landmarks than would typically be needed to perform an image registration, or even none at all. Thus, a second projection image may be provided, that includes a detailed view of a region of interest, and which is robustly registered to the volumetric image.

With reference to the method illustrated in Fig. 1, in the operation S110, a volumetric image V₁ comprising a region of interest ROI, is received. The region of interest that is included within the volumetric image V₁ may in general be any region of interest within the anatomy. The region of interest may be a kidney, for example. The volumetric image V₁ that is received in the operation S110 may be received from a volumetric imaging system, or from another source such as a computer readable storage medium, the Internet, or the Cloud, for example. The volumetric image V₁ may be received by the one or more processors 120 illustrated in Fig. 2. The volumetric image V₁ may be received via any form of data communication, including wired, optical, and wireless communication. By way of some examples, when wired or optical communication is used, the communication may take place via signals transmitted on an electrical or optical cable, and when wireless communication is used, the communication may for example be via RF or optical signals.

The volumetric image V₁ that is received in the operation S110 may in general be any type of volumetric image. The volumetric image may be a CT image, or an MR image, for example. A CT image may be generated by rotating, or stepping, an X-ray source-detector arrangement of a volumetric X-ray imaging system around an imaging region, and subsequently reconstructing the projection data obtained from multiple rotational angles into a volumetric image. Examples of volumetric X-ray imaging systems include computed tomography "CT" imaging systems, cone beam CT "CBCT" imaging systems, and spectral CT imaging systems. An MR image may be generated by a magnetic resonance imaging "MRI" system, and wherein oscillating magnetic fields at specific resonance frequencies are used to generate images of various anatomical structures.

Returning to the method illustrated in Fig. 1, in the operation S120, a first projection image P₁ is received. The first projection image P₁ may in general be any type of projection image. The first projection image P₁ that is received in the operation S120 may be received from a projection imaging system. For example, the first projection image P₁ may be an X-ray projection image, for example. The first projection image P₁ may form part of a temporal sequence of live projection images. The first projection image P₁ may be a fluoroscopic X-ray projection image, for example. The first projection image P₁ may be received from a projection X-ray imaging system, such as the projection X-ray imaging system 110 illustrated in Fig. 2, for example. An example of a projection X-ray imaging system that may serve as the projection X-ray imaging system 110 illustrated in Fig. 2, is the Philips Azurion 7 X-ray imaging system that is marketed by Philips Healthcare, Best, The Netherlands. By way of another example, the first projection image P₁ may alternatively be a SPECT projection image, i.e. a "scintigraphy" image that is generated by a SPECT imaging system. In this example, the first projection image P₁ may be received from a SPECT imaging system. The first projection image P₁ may have a lower image quality than the second projection image P₂, which is described below. This helps to reduce exposure time, dose, and so forth. The first projection image P₁ may be received by the one or more processors 120 illustrated in Fig. 2. The first projection image P₁ may be received via any form of data communication, as described above for the volumetric image V₁.

The first projection image P₁ that is received in the operation S120 corresponds to a first portion of the volumetric image V₁ in the sense that at least one of the features represented in the first projection image P₁ is also represented in the volumetric image V₁. In some examples, the first portion of the volumetric image V₁ may include the region of interest, but this is not essential, and the first portion of the volumetric image V₁ may in general be any portion of the volumetric image V₁.

The first projection image P₁ that is received in the operation S120 is generated from a first position POS₁ of a projection imaging system 110. The position of the projection imaging system 110 may be defined in various ways. For example, the position may be defined with respect to a subject by means of a rotational angle and/or a tilt angle, as described below with reference to Fig. 3 and Fig. 4. Fig. 3 is a schematic diagram illustrating a position of a projection imaging system 110 respective a region of interest ROI, including a rotational angle α of a central ray of the projection imaging system around a longitudinal axis of a subject 160, in accordance with some aspects of the present disclosure. Fig. 4 is a schematic diagram illustrating a position of a projection imaging system 110 respective a region of interest ROI, including a tilt angle β of a central ray of the projection imaging system with respect to a cranial-caudal axis of the subject 160, in accordance with some aspects of the present disclosure. In Fig. 3 and Fig. 4, an X-ray source 130 and an X-ray detector 140 of the projection X-ray imaging system 110 are also illustrated, together with a subject 160. Thus, the position POS₁ of the projection imaging system 110 may be defined by a rotational angle α and/or a tilt angle β, as illustrated in Fig. 3 and Fig. 4, respectively. The rotational angle α, and the tilt angle β, may be determined using various sensors. For example, the rotational angle α, and the tilt angle β, may be determined using a rotational encoder. Other types of sensors, including a linear encoder, a camera, a depth camera, and so forth may alternatively be used to determine the position POS₁ of the projection imaging system 110. Instead of being defined with respect to the subject as described above, the position POS₁ of the projection imaging system may alternatively be defined with respect to another frame of reference, such as a frame of reference of the projection imaging system 110, for example.

Returning to the method illustrated in Fig. 1, in the operation S130 a spatial transformation ST_{P1→V1} is computed between the first projection image P₁ and the volumetric image V₁. The transformation is computed based on the identification of a plurality of landmarks represented in both the first projection image and the volumetric image. An example of the operation S130 is described with reference to Fig. 5, which is a schematic diagram illustrating an example of the operation of computing S130 a spatial transformation ST_{P1→V1} between a first projection image P₁ and a volumetric image V₁ based on an identification of a plurality of landmarks represented in both the first projection image and the volumetric image, in accordance with some aspects of the present disclosure. The first projection image P₁ illustrated on the left-hand side of Fig. 5 is an X-ray projection image, and the volumetric image V₁ illustrated on the right-hand side of Fig. 5 is a CT image. The first projection image P₁ may form part of a temporal sequence of live images, or in other words, the first projection image may be a fluoroscopic X-ray projection image. For ease of illustration, in the example illustrated in Fig. 5, the first projection image P₁ and a volumetric image V₁ provide similar perspectives of the anatomy.

In the example volumetric image V₁ illustrated on the right-hand side of Fig. 5, the following landmarks have been identified: main (aortic) bifurcation, left 11^{th} rib end point, left 12^{th} rib end point, left L5 transverse process, right L5 transverse process, and sacrum tip. The landmarks that are used in the operation S130 may in general be provided by anatomical features, or by fiducial markers. Anatomical features including bones such as ribs, the spine, the pelvis, and so forth, organ contours such as a contour of the lung, the diaphragm, the heart shadow, and so forth, may serve as anatomical landmarks, for example. Such features are identifiable in CT images by virtue of their X-ray attenuation. Fiducial markers that are formed from X-ray attenuating materials are also identifiable in CT images, and these may also serve as landmarks. The fiducial landmarks may be located superficially, or within the body, and at known reference positions. In the latter case, the fiducial markers may have been implanted for use as a surgical guide for example. An implanted device such as a pacemaker may also serve as a fiducial marker. Fiducial markers may also be provided by interventional devices that are inserted within the body.

The landmarks that are used in the operation S130may be identified in the projection image P₁, and in the volumetric image V₁, in various ways. The landmarks may be identified manually, or automatically. In the former case, a user may identify the landmarks by means of a user input device such as a pointing device, a touchscreen, a virtual reality device, and so forth, interacting with a displayed image. In the latter case, the landmarks may be identified automatically by applying a feature detector, performing a (model-based) segmentation, or applying a neural network to the respective images. Examples of feature detectors include an edge detector, a model-based segmentation, and a neural network. One example of a neural network that may be used for this purpose is disclosed in a document by Ronneberger, O., et al., "U-Net: Convolutional Networks for Biomedical Image Segmentation", MICCAI 2015, LNCS, Vol. 9351: 234 - 241. An example of a segmentation technique that may be used to automatically identify landmarks is disclosed in a document by Brosch, T., and Saalbach, A., "Foveal fully convolutional nets for multi-organ segmentation", Proc. SPIE 10574, Medical Imaging 2018: Image Processing, 105740U, 2 March 2018. In one example, as many as possible anatomical landmarks are identified independently in the projection image P₁ and in the volumetric image V₁, and the intersection of the two sets is used to register the images, as described in more detail below.

The spatial transformation that is computed in the operation S130 is a mathematical operation that maps the positions of the landmarks between the first projection image P₁ and the volumetric image V₁. The transformation may be affine, or non-affine. For ease of illustration, in the example illustrated in Fig. 5, the transformation between the first projection image P₁ and a volumetric image V₁ is affine and includes only a linear translation. However, it is to be appreciated that this transformation may alternatively or additionally include other operations, such as a rotation, and a shear, for example. Various image registration techniques may be used to determine the spatial transformation ST_{P1→V1} using the landmarks. For instance, in one technique a ray-tracing operation is used wherein virtual projection images are generated using a modelled geometry of an X-ray source and X-ray detector. Virtual projection images are generated by projecting rays from the X-ray source 130 through the volumetric image V₁ and onto the X-ray detector 140. This operation is performed iteratively with different relative positions of the X-ray source, X-ray detector and volumetric image V₁, until a perspective is found in which the positions of the virtually projected landmarks in V₁ best match those marked in the first projection image P₁. The spatial transformation ST_{P1→V1} is provided by the perspective which provides the best match. The iteration process can be guided by a commonly known search pattern principle, such as steepest gradient descent. Alternatively, a neural network may be trained to determine the spatial transformation ST_{P1→V1} from the inputted landmarks of the volumetric image and the projection image. The neural network maybe trained using landmarks of the volumetric training images and corresponding projection images as training data. The projection images may be generated by projecting the volumetric training images onto a virtual detector using a modelled X-ray source-detector geometry, and from known, ground truth, perspective that represents the spatial transformation.

In some examples, the method described with reference to Fig. 1 may also include outputting an indication of an estimated accuracy of the spatial transformation ST_{P1→V1}. An estimate of the accuracy of the spatial transformation may be determined by calculating an error value representing the difference between the actual positions of the landmarks in volumetric image V₁, and their mapped positions that are provided by the spatial transformation ST_{P1→V1}. An estimate of the accuracy of the spatial transformation ST_{P1→V1} may alternatively be determined based on a count of the total number of landmarks that are common to both images of the landmarks. If only a few landmarks are common to both images, the accuracy may be relatively lower, whereas if numerous landmarks are common to both images, the accuracy may be relatively higher. An estimate of the accuracy of the spatial transformation ST_{P1→V1} may alternatively be determined based on a mutual proximity of the common landmarks in one of the images. If the landmarks are close together, or even overlapping, the estimated accuracy of the spatial transformation ST_{P1→V1} may be relatively lower than when the landmarks are more widely distributed. If a neural network is used to identify the landmarks, the neural network may output a confidence value for its predictions. This confidence value may also be used to calculate an estimate of the accuracy of the spatial transformation ST_{P1→V1}. The estimated accuracy of the spatial transformation ST_{P1→V1} may be outputted in various ways. For instance, the first projection image P₁, or the volumetric image V₁, may be displayed on a display device, and a coloured frame may be provided around the image to indicate the accuracy. A green colour may indicate high accuracy, whereas a red colour may indicate low accuracy, for example. The estimated accuracy may alternatively be outputted as a numerical value. The estimated accuracy of the spatial transformation ST_{P1→V1} may alternatively be provided via another means, such as via audio feedback.

Returning to the method illustrated in Fig. 1, in the operation S140, input defining the region of interest ROI in the volumetric image V₁, is received. As mentioned above, the region of interest may be a kidney, for example. The region of interest may be defined manually, or automatically. A user may manually identify the region of interest by means of a user input device such as a pointing device, a touchscreen, a virtual reality device, and so forth, interacting with a displayed volumetric image V₁. For instance, a user may delineate the region of interest by means of the pointing device. Alternatively, the user may use the pointing device to select an automatically segmented region of interest that is segmented using known image segmentation techniques. Thus, the input defining the region of interest ROI in the volumetric image V₁, may be received from a user input device. Alternatively, the region of interest may be identified automatically by applying a feature detector or a segmentation to the respective images, or by inputting the respective images into a neural network, as described above for the identification of the landmarks. In these examples in which the region of interest is identified automatically, the input defining the region of interest ROI in the volumetric image V₁, may be received from a processor that applies the feature detector or the segmentation to the respective images, or from the processor that performs inference on the images with the trained neural network.

An example of the identification a region of interest ROI is described with reference to the volumetric image V₁ illustrated on the right-hand side of Fig. 5. In this image, the region of interest ROI is a kidney. A user may define the region of interest ROI manually by for example drawing a bounding box around the kidney using a pointing device such as a mouse, as indicated by the rectangular outline at the top left-hand side of this image. Alternatively, the kidney may be defined automatically in the volumetric image V₁. A segmentation algorithm may be used to define the region of interest automatically, for example. In some examples, the automatically defined region of interest may be used as the region of interest contingent on user confirmation.

Returning to the method illustrated in Fig. 1, in the operation S150, one or more adjustments T_{P1→P2} to the first position POS₁ of the projection imaging system are then calculated in order to provide a second position POS₂ of the projection imaging system for generating a second projection image P₂ representing the region of interest ROI defined in the volumetric image V₁. In the example described above with reference to Fig. 5, the region of interest ROI illustrated in the volumetric image V₁ is already visible in the first projection image P₁, and it is desired to adjust the position of the projection imaging system 110 so as to provide a projection image with a more-detailed view of this region of interest ROI. It may be desired to provide a more detailed view of the kidney illustrated in Fig. 5 in order to perform a PNCL procedure on the kidney, for example. The example described with reference to Fig. 5 is continued with further reference to Fig. 6, which is a schematic diagram illustrating an example of a first projection image P₁ generated by a projection imaging system 110 in a first position POS₁, and a second projection image P₂ generated by the projection imaging system 110 in a second position POS₂, in accordance with some aspects of the present disclosure.

As illustrated in Fig. 6A, in the position POS₁, the projection imaging system 110 generates the first projection image P₁ illustrated in Fig. 6B. The region of interest ROI is also illustrated in Fig. 6A for reference purposes. In order to provide a projection image representing the region of interest ROI defined in the volumetric image V₁, two translation operations are required from the position POS₁: i) a translation, or zoom operation, wherein the X-ray source of the projection imaging system 110 is translated towards the region of interest in a direction parallel to a line connecting the X-ray source to the midpoint of the detector, and ii) a lateral translation wherein the X-ray source and detector are translated perpendicularly with respect to the line connecting the X-ray source to the midpoint of the detector. In this example, the one or more adjustments T_{P1→P2} to the first position POS₁ of the projection imaging system that are used to provide the second position POS₂ of the projection imaging system therefore include two translation operations. The second position POS₂, and the projection image that is generated with the projection imaging system 110 in the second position POS₂, are illustrated in Fig. 6C and Fig. 6D respectively. More generally, the one or more adjustments T_{P1→P2} that are used to provide the second position POS₂ of the projection imaging system may include one or more operations, such as for example a change in magnification of the projection imaging system 110; a translation of the projection imaging system 110; and a rotation of the projection imaging system 110. In the example of a change in magnification, the one or more adjustments T_{P1→P2} to the first position POS₁ of the projection imaging system comprise reducing a separation between a source of the projection imaging system and the region of interest.

The one or more adjustments T_{P1→P2} that are calculated in the operation S150 using the spatial transformation ST_{P1→V1}, i.e. the mapping between the first projection image P₁ and the volumetric image V₁, and the input received in the operation S140, may be calculated by determining change in a perspective of the projection imaging system with respect to the volumetric image V₁ that would provide the desired projection image of the region of interest that is defined in the volumetric image V₁. The one or more adjustments T_{P1→P2} may be calculated using a model of the projection imaging system 110 and the volumetric image V₁. With reference to Fig. 6, the one or more adjustments T_{P1→P2} may be calculated as follows. With the projection imaging system 110 in the position POS₁, the spatial transformation ST_{P1→V1} provides a mapping between the current position of the projection imaging system 110 that generated the first projection image P₁, and the volumetric image V₁. In other words, it provides a current perspective of the projection imaging system 110 with respect to the volumetric image. The input defining the region of interest ROI in the volumetric image V₁ provides a subsequent perspective of the projection imaging system with respect to the volumetric image V₁ that is necessary to provide the desired, second projection image of the region of interest. The difference between the current perspective and subsequent perspective with respect to the volumetric image can then be calculated to provide the one or more adjustments T_{P1→P2} to the first position POS₁ of the projection imaging system to provide a second position POS₂ of the projection imaging system for generating a second projection image P₂.

The one or more adjustments T_{P1→P2} that are calculated in this manner may include e.g. the translation operations such as those described above and/or adjustments to the angles α and β described with reference to Fig. 3 and Fig. 4. The one or more adjustments T_{P1→P2} are then used to manually, or automatically, adjust the position of the projection imaging system 110 to the second position POS₂. If manual adjustments are performed, the one or more adjustments T_{P1→P2} may be outputted in the form of instructions for a user to adjust the position of the projection imaging system. In this case, the one or more adjustments T_{P1→P2} may be outputted to a display, or outputted as an audio message, for example, whereupon a user may manually adjust the position of the projection imaging system to the second position POS₂. If automatic adjustments are performed, the adjustments may be outputted as control signals to various actuators that adjust the position of the projection imaging system 110 to the second position POS₂. In this case, the method described with reference to Fig. 1 also includes automatically applying the calculated one or more adjustments T_{P1→P2} to the first position POS₁ of the projection imaging system to provide the second position POS₂ of the projection imaging system.

In this example wherein the adjustments are automatically applied to the projection imaging system, the second position may be provided by using e.g. a feed-forward control of the projection imaging system wherein the position of components of the projection imaging system are known by e.g. rotating a gear through a predetermined number of revolutions. Alternatively, second position may be provided by using feedback from various sensors such as a linear encoder, a camera, a depth camera, and so forth described above.

In one example, a user may confirm a recommendation to adjust the position to the second position POS₂. In this example the method illustrated in Fig. 1 also includes:
- outputting, in response to the received input defining the region of interest ROI in the volumetric image V₁, a visual representation of a recommended second position of the projection imaging system 110 for generating the second projection image P₂ representing the region of interest ROI; and
- using the recommended second position as the second position POS₂ in response to user confirmation of the recommended second position.

In this example, the second position POS₂ may be provided automatically in response to the user confirmation. The visual representation of the recommended second position of the projection imaging system 110 may be outputted to a display device, such as the monitor 170 illustrated in Fig. 2, for example. The visual representation may include an icon illustrating the recommended second position, or positioning instructions as to how to obtain the recommended second position, for example. Positioning instructions may describe an optimized movement path of the system, for instance to minimize movement, or to avoid obstacles such as operator's body. By adjusting the positions subject to the user's confirmation in this manner, it may be assured that the adjustments to the position are not inhibited, for example by the subject, and that it is therefore safe to adjust the position of the projection imaging system to the second position POS₂.

Returning to the method illustrated in Fig. 1; after the position of the projection imaging system 110 has been adjusted to the second position POS₂, the method continues with the operation S160, in which a second projection image P₂ representing the region of interest ROI defined in the volumetric image V₁ is received. The second projection image P₂ is generated from the second position POS₂. The second projection image P₂ may be generated automatically, or in response to user input. The second projection image P₂ may be received from the projection imaging system 110 as described above. An example of a second projection image P₂ that is generated subsequent to the one or more adjustments T_{P1→P2} is illustrated in Fig. 6D.

The method illustrated in Fig. 1 then continues with the operation S170 in which the second projection image P₂ is registered to at least a portion of the volumetric image V₁ based on the spatial transformation ST_{P1→V1} and the calculated one or more adjustments T_{P1→P2}. Thus, the registration uses the changes in translation, rotation, and so forth, that are calculated in the operation S150, to register the two images. The registered images may then be outputted. For example, the images may be outputted to a display device such as the monitor 170 illustrated in Fig. 2, or to a computer readable storage medium.

In so doing, a registration is provided between the second projection image P₂, and the volumetric image V₁, in which it is not essential that the second projection image P₂ includes any of the landmarks that are common to the two images. This is because the second projection image is registered to the volumetric image based on the spatial transformation as well as the calculated one or more adjustments to the first position of the projection imaging system.

It is noted that in the above example that was described with reference to Fig. 6, the region of interest ROI is visible in the first projection image P₁. However, this is not essential for the operation of the method. For instance, the region of interest may be outside the field of view of the projection imaging system that provides the first projection image P₁, and it may be desired to zoom-in to provide a view of a region of interest in the anatomy that is represented in the volumetric image V₁, and which is not currently represented in the first projection image P₁. In this case, the region of interest ROI may be defined in the volumetric image V₁ in the same manner, and the adjustments calculated, despite the absence of the region of interest in the first projection image P₁.

It is also noted that in the example illustrated in Fig. 5, the region of interest ROI includes a single landmark, i.e. "main (aortic) bifurcation" that is common to the first projection image P₁ and the volumetric image V₁. However, the method does not rely on the presence of any landmarks within the region of interest ROI. Thus, in the operation of computing S130 a spatial transformation ST_{P1→V1}, the region of interest ROI may include zero or more landmarks.

It is also noted that whilst in the examples described above the second projection image P₂ was described as a single image, the second projection image P₂ may form part of a temporal sequence of live images. In other words, the second projection image P₂ may be a fluoroscopic X-ray projection image.

The method described with reference to Fig. 1 may also include one or more further operations.

In some examples, intensity transformations are calculated. In one example, an intensity transformation IT_{CT→P1} is calculated between the first projection image P₁ and the volumetric image V₁, and the intensity transformation is used to adjust image intensity values in the first projection image P₁. In general, the pixel intensity values in projection images, such as X-ray projection images, are affected by the source intensity, e.g. X-ray dose, and the detector sensitivity, of the source and detector that are used to generate the images. Consequently, projection images such as X-ray projection images do not necessarily have an absolute attenuation scale. This is in contrast to computed tomography images, and in which a Hounsfield unit value may be assigned to each voxel, and which represents a radiodensity. The absence of an absolute attenuation scale in projection images hampers the operation of computing S130 a spatial transformation ST_{P1→V1} between the first projection image P₁ and the volumetric image V₁. This is because there can be some uncertainty in the material that is represented by the intensity in the projection image P₁. In this example, the method described with reference to Fig. 1 further includes:
- computing an intensity transformation IT_{CT→P1} between the first projection image P₁ and the volumetric image V₁;
- adjusting image intensity values in the first projection image P₁ using the intensity transformation IT_{CT→P1}; and
- wherein the computing S130 a spatial transformation ST_{P1→V1} between the first projection image P₁ and the volumetric image V₁, is performed using the first projection image P₁ with the adjusted image intensity values.

This helps to improve the accuracy of the computed spatial transformation ST_{P1→V1} because the intensity transformation helps to ensure that materials represented in the first projection image P₁ are mapped to the same materials in the volumetric image V₁. The intensity transformation may be calculated by identifying one or more pairs of regions that are common to the first projection image P₁ and the volumetric image V₁. A pair of such regions may for instance represent a relatively higher attenuation region such as the spine, or a relatively lower attenuation region such as the lung. The intensity transformation may be calculated by determining an intensity mapping that maps the image intensity values in the region of the projection image to the Hounsfield Unit value in the corresponding region in the CT image when the CT image is viewed from the same perspective as the projection image. The so-called "level and window" technique may be used to provide the intensity transformation. In this technique, multiple regions, including a relatively lower attenuation region and a relatively higher attenuation region, are used to provide mapping across a range of image intensity values.

In another example, the intensity transformation may be used to provide adjusted image intensity values in the second projection image. In this example, the method described with reference to Fig. 1 further includes:
- computing an intensity transformation between the first projection image P₁ and the volumetric image V₁, or between the second projection image P₂ and the volumetric image V₁; and
- adjusting image intensity values in the second projection image P₂ using the intensity transformation.

The intensity transformation between the first projection image P₁ and the volumetric image V₁ may be used to adjust image intensity values in the second projection image P₂ based on a correspondence of features represented in the first and second projection images P₁ and P₂. In this example, the adjusted image intensity values that are provided in the second projection image P₂ are more clinically meaningful. The second projection image P₂ that is generated in accordance with this example may then be outputted. For example, it may be outputted to a computer readable storage medium, or to a display device such as the monitor 170 illustrated in Fig. 2. The intensity transformation in this example may be generated in a similar manner to that described for the previous example.

In another example, an accuracy of the spatial transformation ST_{P1→V1} that is computed in the operation S130, is determined. If the accuracy of the spatial transformation ST_{P1→V1} is below a predetermined threshold, one or more projection imaging system adjustments are outputted that are suitable for reducing a magnification of the projection image. An updated first projection image P₁' is then generated by the projection imaging system at the reduced magnification, and this is used to perform the computing S130, and the calculating S150 operations. This helps to improve the accuracy of the registration that is performed in the later operation S170. In this example, the method described with reference to Fig. 1 includes:
- estimating an accuracy of the spatial transformation ST_{P1→V1}:
- outputting one more projection imaging system adjustments for reducing a magnification of the projection image if the estimated accuracy of the spatial transformation ST_{P1→V1} is below a predetermined threshold; and
- wherein the computing S130 a spatial transformation ST_{P1→V1} between the first projection image P₁ and the volumetric image V₁, and the calculating S150 the one or more adjustments T_{P1→P2} to the first position POS₁ of the projection imaging system, are performed using an updated first projection image P₁' generated by the projection imaging system at the reduced magnification.

In this example, the accuracy of the spatial transformation ST_{P1→V1} may be calculated in the same manner as described above. The one more projection imaging system adjustments may be outputted as recommendations, or as control signals for controlling a re-positioning of the projection imaging system. For example, the one more projection imaging system adjustments may be outputted as instructions on a display device such as the monitor illustrated in Fig. 2.

In this example, the operation of outputting one more projection imaging system adjustments for reducing a magnification of the projection image, may include:
- increasing a separation between a source of the projection imaging system and the region of interest by a predetermined amount; or
- increasing a separation between a source of the projection imaging system and the region of interest based on a model representing the region of interest and the positions of one or more of the landmarks identified in the first projection image P₁.

Both of these operations have the effect of reducing the magnification of the region of interest. Consequently, additional landmarks may become visible in the updated first projection image P₁', and these may improve the accuracy of the spatial transformation ST_{P1→V1}.

By way of an example, there may be insufficient landmarks in the image illustrated in Fig. 5 to provide an accurate spatial transformation ST_{P1→V1}. In this case, the separation between a source of the projection imaging system and the region of interest may be increased by stepping the position of the source-detector arrangement away from the region of interest. Alternatively, a model representing the region of interest may be used. The model may be provided by the volumetric image in which the available landmarks have been identified, and a model of the geometric positions of the X-ray source and X-ray detector. This model may be used to calculate how to re-position the projection imaging system to provide a field of view that captures additional landmarks. Similarly, a neural network may be trained to predict how to re-position the projection imaging system to provide a field of view that captures additional landmarks. The neural network may be trained to learn the expected spatial relationship between the landmarks. Based on a model that is provided by the volumetric image in which the available landmarks have been identified, and a model of the geometric positions of the X-ray source and X-ray detector, the neural network may predict from the visible landmarks, how to adjust the re-position the projection imaging system to provide a field of view that captures additional landmarks. The adjustments made in this example may include an error margin in order to ensure that the landmarks are completely captured with the reduced magnification.

Various images may also be outputted in accordance with the examples described above. Thus, in the examples described above, the method may also include outputting one or more of:
- the first projection image P₁;
- the second projection image P₂;
   - - the volumetric image V₁; and
   a registered image comprising the first projection image P₁ and the volumetric image V₁, or the second projection image P₂ and the volumetric image V₁.

In general, the registered image may be provided as an overlay image, or a fused image, for example. The images may be outputted to a display device such as the monitor illustrated in Fig. 2 and/ or to a computer-readable storage medium. One or more of the landmarks that are used in the operation S130 may also be displayed in these image(s).

In another example, a computer program product is provided. The computer program product comprises instructions which when executed by one or more processors 120, cause the one or more processors 120 to carry out a method of registering medical images. The method includes:
- receiving S110 a volumetric image V₁ comprising a region of interest ROI;
- receiving S120 a first projection image P₁, the first projection image being generated from a first position POS₁ of a projection imaging system 110 and corresponding to a first portion of the volumetric image V₁;
- computing S130 a spatial transformation ST_{P1→V1} between the first projection image P₁ and the volumetric image V₁ based on an identification of a plurality of landmarks represented in both the first projection image and the volumetric image;
- receiving S140 input defining the region of interest ROI in the volumetric image V₁;
- calculating S150, based on the spatial transformation ST_{P1→V1} and the received input, one or more adjustments T_{P1→P2} to the first position POS₁ of the projection imaging system to provide a second position POS₂ of the projection imaging system for generating a second projection image P₂ representing the region of interest ROI defined in the volumetric image V₁;
- receiving S160 a second projection image P₂ representing the region of interest ROI defined in the volumetric image V₁, the second projection image P₂ being generated from the second position POS₂; and
- registering S170 the second projection image P₂ to at least a portion of the volumetric image V₁ based on the spatial transformation ST_{P1→V1} and the calculated one or more adjustments T_{P1→P2}.

In another example, a system 100 for registering medical images, is provided. The system includes one or more processors 120 configured to:
- receive S110 a volumetric image V₁ comprising a region of interest ROI;
- receive S120 a first projection image P₁, the first projection image being generated from a first position POS₁ of a projection imaging system 110 and corresponding to a first portion of the volumetric image V₁;
- compute S130 a spatial transformation ST_{P1→V1} between the first projection image P₁ and the volumetric image V₁ based on an identification of a plurality of landmarks represented in both the first projection image and the volumetric image;
- receive S140 input defining the region of interest ROI in the volumetric image V₁;
- calculate S150, based on the spatial transformation ST_{P1→V1} and the received input, one or more adjustments T_{P1→P2} to the first position POS₁ of the projection imaging system to provide a second position POS₂ of the projection imaging system for generating a second projection image P₂ representing the region of interest ROI defined in the volumetric image V₁;
- receive S160 a second projection image P₂ representing the region of interest ROI defined in the volumetric image V₁, the second projection image P₂ being generated from the second position POS₂; and
- register S170 the second projection image P₂ to at least a portion of the volumetric image V₁ based on the spatial transformation ST_{P1→V1} and the calculated one or more adjustments T_{P1→P2}.

An example of the system 100 is illustrated in Fig. 2. It is noted that the system 100 may also include one or more of: a projection imaging system for generating the first and second projection images, P₁ and P₂, such as for example the projection X-ray imaging system 110 illustrated in Fig. 2; a monitor 170 for displaying the projection image(s), the volumetric image V₁, the registered image(s), the adjustments to the position of the projection imaging system 110, and so forth; a patient bed 180; and a user input device (not illustrated in Fig. 2) configured to receive user input for use in connection with the operations performed by the system, such as a keyboard, a mouse, a touchscreen, and so forth.

The above examples are to be understood as illustrative of the present disclosure, and not restrictive. Further examples are also contemplated. For instance, the examples described in relation to computer-implemented methods, may also be provided by the computer program product, or by the computer-readable storage medium, or by the system 100, in a corresponding manner. It is to be understood that a feature described in relation to any one example may be used alone, or in combination with other described features, and may be used in combination with one or more features of another of the examples, or a combination of other examples. Furthermore, equivalents and modifications not described above may also be employed without departing from the scope of the invention, which is defined in the accompanying claims. In the claims, the word "comprising" does not exclude other elements or operations, and the indefinite article "a" or "an" does not exclude a plurality. The mere fact that certain features are recited in mutually different dependent claims does not indicate that a combination of these features cannot be used to advantage. Any reference signs in the claims should not be construed as limiting their scope.

## Claims

1. A computer-implemented method of registering medical images, the method comprising:
receiving (S110) a volumetric image (V₁) comprising a region of interest (ROI);
receiving (S120) a first projection image (P₁), the first projection image being generated from a first position (POS₁) of a projection imaging system (110) and corresponding to a first portion of the volumetric image (V₁);
computing (S130) a spatial transformation (ST_{P1→V1}) between the first projection image (P₁) and the volumetric image (V₁) based on an identification of a plurality of landmarks represented in both the first projection image and the volumetric image;
receiving (S140) input defining the region of interest (ROI) in the volumetric image (V₁);
calculating (S150), based on the spatial transformation (ST_{P1→V1}) and the received input, one or more adjustments (T_{P1→P2}) to the first position (POS₁) of the projection imaging system to provide a second position (POS₂) of the projection imaging system for generating a second projection image (P₂) representing the region of interest (ROI) defined in the volumetric image (V₁);
receiving (S160) a second projection image (P₂) representing the region of interest (ROI) defined in the volumetric image (V₁), the second projection image (P₂) being generated from the second position (POS₂); and
registering (S170) the second projection image (P₂) to at least a portion of the volumetric image (V₁) based on the spatial transformation (ST_{P1→V1}) and the calculated one or more adjustments (T_{P1→P2}).

2. The computer-implemented method according to claim 1, wherein the method further comprises:
computing an intensity transformation (IT_{CT→P1}) between the first projection image (P₁) and the volumetric image (V₁);
adjusting image intensity values in the first projection image (P₁) using the intensity transformation (IT_{CT→P1}); and
wherein the computing (S130) a spatial transformation (ST_{P1→V1}) between the first projection image (P₁) and the volumetric image (V₁), is performed using the first projection image (P₁) with the adjusted image intensity values.

3. The computer-implemented method according to claim 1 or claim 2, wherein the method further comprises:
computing an intensity transformation between the first projection image (P₁) and the volumetric image (V₁), or between the second projection image (P₂) and the volumetric image (V₁); and
adjusting image intensity values in the second projection image (P₂) using the intensity transformation.

4. The computer-implemented method according to any one of claims 1 - 3, wherein the method further comprises:
estimating an accuracy of the spatial transformation (ST_{P1→V1});
o utputting one more projection imaging system adjustments for reducing a magnification of the projection image if the estimated accuracy of the spatial transformation (ST_{P1→V1}) is below a predetermined threshold; and
wherein the computing (S130) a spatial transformation (ST_{P1→V1}) between the first projection image (P₁) and the volumetric image (V₁), and the calculating (S150) the one or more adjustments (T_{P1→P2}) to the first position (POS₁) of the projection imaging system, are performed using an updated first projection image (P₁') generated by the projection imaging system at the reduced magnification.

5. The computer-implemented method according to claim 4, wherein the outputting one more projection imaging system adjustments for reducing a magnification of the projection image, comprises:
increasing a separation between a source of the projection imaging system and the region of interest by a predetermined amount; or
increasing a separation between a source of the projection imaging system and the region of interest based on a model representing the region of interest and the positions of one or more of the landmarks identified in the first projection image (P₁).

6. The computer-implemented method according to claim 1, wherein the method further comprises:
outputting, in response to the received input defining the region of interest (ROI) in the volumetric image (V₁), a visual representation of a recommended second position of the projection imaging system (110) for generating the second projection image (P₂) representing the region of interest (ROI); and
using the recommended second position as the second position (POS₂) in response to user confirmation of the recommended second position.

7. The computer-implemented method according to any previous claim, wherein the method further comprises:
outputting an indication of an estimated accuracy of the spatial transformation (ST_{P1→V1}).

8. The computer-implemented method according to any previous claim, wherein the method further comprises outputting one or more of:
the first projection image (P₁);
the second projection image (P₂);
the volumetric image (V₁); and
a registered image comprising the first projection image (P₁) and the volumetric image (V₁), or the second projection image (P₂) and the volumetric image (V₁).

9. The computer-implemented method according to claim 1, wherein the method further comprises:
automatically applying the calculated one or more adjustments (T_{P1→P2}) to the first position (POS₁) of the projection imaging system to provide the second position (POS₂) of the projection imaging system.

10. The computer-implemented method according to claim 1, wherein the one or more adjustments (T_{P1→P2}) comprise one or more of:
a change in magnification of the projection imaging system (110);
a translation of the projection imaging system (110); and
a rotation of the projection imaging system (110).

11. The computer-implemented method according to claim 1, wherein the one or more adjustments (T_{P1→P2}) to the first position (POS₁) of the projection imaging system comprise reducing a separation between a source of the projection imaging system and the region of interest.

12. The computer-implemented method according to any previous claim, wherein the first projection image (P₁) and the second projection image (P₂) each comprise an X-ray projection image and/or wherein the volumetric image (V₁) comprises a computed tomography, CT, image.

13. The computer-implemented method according to claim 1, wherein the first projection image (P₁) and the second projection image (P₂) each comprise a fluoroscopic X-ray projection image.

14. A computer program product comprising instructions which when executed by one or more processors, cause the one or more processors to carry out the method according to any one of claims 1 - 14.

15. A system (100) for registering medical images, the system comprising one or more processors (120) configured to:
receive (S110) a volumetric image (V₁) comprising a region of interest (ROI); receive (S120) a first projection image (P₁), the first projection image being generated from a first position (POS₁) of a projection imaging system (110) and corresponding to a first portion of the volumetric image (V₁);
compute (S130) a spatial transformation (ST_{P1→V1}) between the first projection image (P₁) and the volumetric image (V₁) based on an identification of a plurality of landmarks represented in both the first projection image and the volumetric image;
receive (S140) input defining the region of interest (ROI) in the volumetric image (V₁);
calculate (S150), based on the spatial transformation (ST_{P1→V1}) and the received input, one or more adjustments (T_{P1→P2}) to the first position (POS₁) of the projection imaging system to provide a second position (POS₂) of the projection imaging system for generating a second projection image (P₂) representing the region of interest (ROI) defined in the volumetric image (V₁);
receive (S160) a second projection image (P₂) representing the region of interest (ROI) defined in the volumetric image (V₁), the second projection image (P₂) being generated from the second position (POS₂); and
register (S170) the second projection image (P₂) to at least a portion of the volumetric image (V₁) based on the spatial transformation (ST_{P1→V1}) and the calculated one or more adjustments (T_{P1→P2}).
